# EUROPEAN PATENT APPLICATION

(11) **EP 2 824 615 A1**
(43) Date of publication of application: **14.01.2015**
(21) Application number: 14171854.4
(22) Date of filing: 10.06.2014
(51) Int. Cl.: G06Q 10/06, G06F 17/30

(54) **Efficient score calculation in a telecommunication system**

(30) Priority: 11.06.2013 US 201313915122
(71) Applicant: SAP SE, 69190 Walldorf (DE)
(72) Inventor: K, Prajesh, 69190 Walldorf (DE); Yalcin, Baris, 69190 Walldorf (DE)
(74) Representative: Richardt Patentanwälte PartG mbB

(57) **Abstract**

The invention relates to a telecommunication system (800) for efficient score calculation in a telecommunication network. The telecommunication system comprises a score calculation device (220) connected via the network to a plurality of client devices, and a database server comprising a parallel processor (239) for providing an in-memory DBMS (230). The score calculation device receives a request for calculating a score value from a client device. A plurality of specially adapted stored procedures stored in the in-memory database is used for retrieving score master in parallel. Said master data is returned in a single response to the score calculation device that uses said data as input for sequentially executing steps in a scoring scheme. The final resource score value is returned to the client device.

## Description

### Field of the invention

The present disclosure relates to a telecommunication system and corresponding method for efficiently calculating and transferring scores.

### Background and related art

Complex score calculation schemes uses e.g. in distributed telecommunication networks e.g. fur industrial process planning and related tasks usually comprise a plurality of calculation steps that depend on each other and thus have to be executed sequentially. When executing a score calculation in a distributed telecommunication system, the input required by each step was retrieved from respective resources. Thus, a large number of database connections had to be opened and closed and many request-response cycles had to be performed and managed by all involved data processing devices. This resulted in poor performance and high network traffic.

A major and processing-intensive step in resource score calculations in technical processes and transactions (e.g., manufacturing, production) is an inquiry or lookup into a resource score master database. Depending upon the complexity of the resource score calculation scoring scheme, during calculation many database lookups need to be made against resource score master database tables. These lookups could relate to data and criteria that have an impact on the resource score. For example, a resource could be a machine of a particular type and the resource score could indicate if said machine is usable in a particular technical field for a particular technical task and optionally considering some non-technical constraints such as availability of trained staff and the like. For a given technical task, multiple machines or machine components may be suited in principle, but some machines may be more suited for said task than others. All aspects that have to be taken into account when calculating the final resource score may be specified in data referred herein as "resource score master data" (RSMD). Usually, database look-ups take time, and because of that, the end user response time is degraded. This delay may block the function of the client device having requested a score calculation.
In order to avoid this degradation in response time, resource score calculation applications usually cache the resource score master data in a shared memory of a system. However, caching resource score master data in shared memory of the score calculation server according to state of the art methods consumes additional memory and increases the total cost of ownership (TCO), especially for large customers. Additionally, in order to manage such a cache (*i.e.*, make sure that it is up-to-date with the source resource score master database image), cache handlers have to employ additional services, which sometimes occupy many system resources (like work processes), and that make the system almost unusable for time critical processes and applications.

### Summary

It is an objective of the present invention to provide for an improved system and method for calculating a resource score value as specified in the independent claims. Embodiments of the invention are given in the dependent claims. Embodiments of the present invention can be freely combined with each other if they are not mutually exclusive.

The term 'resource score master data' relates to data that is required as input for calculating a final score for a resource. The resource score master data may be stored in different tables. The retrieval of the resource score master data may involve complex calculations, e.g. the execution of complex database table joins and the execution of aggregating functions.

A 'resource' may be any object for which a score can be calculated. Often, said object and/or the score calculation for said object may be highly complex and may involve the evaluation of a plurality of criteria on which the final resource score depends. A resource may be, for example and without limitation, a machine, a machine component, a manufactured product and the like. A resource score is a numerical data value. It may be, for example and without limitation, a data value indicating the suitability of a machine to execute a technical task, the expected lifetime of a machine, the price of an object, or the like.

The term 'in-memory database management system (DBMS)' relates to a database system that always keeps its data completely in main memory (and not on disk as with traditional databases). Main memory is physical memory that can be directly accessed by the central processing unit. An example of an in-memory DBMS is SAP HANA. A DBMS is a set of administrative programs used to create, maintain and manage a database.

A 'data store' is a data structure, e.g. a set of one or more tables, that comprises data managed by a DBMS.

The term 'at runtime' relates the period of time when a program is running. It begins when a program is opened (or executed) and ends with the program is quit or closed.
A 'client device' is a data processing device, e.g. a computer. In particular, the client device may be a mobile data processing device, e.g. a notebook, tabloid computer or smartphone. The client device may have significantly less computational resources (CPU, memory, etc) than the score calculation device. A 'score calculation device' may be any telecommunication system, e.g. a computer, capable of automatically calculating a score value.

The term 'at design time' relates to the time when a program is created, e.g. programmed, or when existing program code of the program is modified.

A 'scoring scheme' is a formal description of a logical workflow for calculating a score. A scoring scheme comprises at least an indication of the data used as input for calculating a final resource score value and a reference to the source where said data can be retrieved.

A 'stored procedure' is a piece of program logic, e.g. a subroutine, that is part of a DBMS and that is available to applications that access the DBMS. A stored procedure may be stored in the database data dictionary. Stored procedures may return result sets, i.e. the results of a SELECT statement. Such result sets can be processed using cursors, by other stored procedures, by associating a result set locator, or by applications. Stored procedures may also contain declared variables for processing data and cursors that allow it to loop through multiple rows in a table. Stored procedure flow control statements may include IF, WHILE, LOOP, REPEAT, and CASE statements, and more.

In one aspect, the invention relates to telecommunication system for efficient score calculation in a telecommunication network. The telecommunication system comprising a score calculation device, e.g. a desktop computer or a server, connected via the network to a plurality of client devices, and a database server. The database server comprises a parallel processor configured for providing an in-memory database management system (DBMS). The in-memory DBMS is accessible by a score calculation device via the network, e.g. the internet. At runtime of a scoring engine hosted by the score calculation device for calculating the score, the system is configured for:
- the score calculation device receiving a first request from one of the client devices;
- the score calculation device identifying at least one scoring scheme associated with the request, the at least one scoring scheme specifying a sequence of calculation steps for calculating a final resource score value; each step (except the first step that does not have a preceding step) of the sequence of calculation steps uses an intermediate result generated by a previous step as input, wherein two or more of said steps in addition respectively require resource score master data as input for calculating said step' s intermediate result; for example, a schema-ID may be received as part of the first request; the schema-ID may be any data value that can be used for identifying a particular scoring scheme; the schema-ID may be a customer-ID that is mapped to a particular scoring scheme by a mapping maintained by the score calculation device;
- the score calculation device identifying at least one scoring scheme associated with the first request, the at least one scoring scheme specifying a sequence of calculation steps for calculating a final resource score value, each step of the sequence of calculation steps using an intermediate result generated by a previous step as input, wherein two or more of said steps in addition respectively require resource score master data as input for calculating said step's intermediate result;
- the score calculation device identifying a plurality of stored procedures being assigned to the at least one scoring scheme and being stored in the in-memory DBMS, the plurality of stored procedures being parallel executable and being configured to retrieve, when executed, the resource score master data required as input by one or more of the steps of the at least one scoring scheme; For example, the score calculation device may be operable to establish a database connection to the in-memory DBMS for having read and optionally also write access to the in-memory DBMS. The in-memory DBMS may be hosted on the score calculation device or on a different server computer connected to the score calculation device via a network, e.g. the internet or an Intranet;
- the score calculation device triggering, by sending a single second request to the in-memory DBMS, a parallel execution of the identified stored procedures by the in-memory DBMS;
- the in-memory DBMS executing in parallel said stored procedures for retrieving all resource score master data required by the steps of the at least one scoring scheme;
- the score calculation device receiving the retrieved resource score master data from the in-memory DBMS in a single first response;
- after having received the resource score master data, the score calculation device sequentially executing the steps of the at least one scoring scheme for calculating the final resource score value, thereby in each step taking at least parts of the received resource score master data as input; and
- the score calculation device returning the calculated final resource score value to the one client device in a single second response.

Said features may be advantageous, as the retrieval of resource score master data is significantly accelerated. Thus, the score can be calculated and returned to the client device more quickly. Also, there may be fewer database connections and database queries necessary for retrieving the resource score master data. This will reduce network traffic and accelerate the score calculation.

By making use of specially adapted stored procedures which are operable to retrieve all resource score master data required for calculating the final score value in accordance with a scoring scheme, it is possible to retrieve the required data in parallel. In state of the art systems, the database queries used for retrieving the resource score master data were often executed in accordance with the sequence of sequentially executed score calculation steps. However, said sequential retrieval was slow and blocked many resources: as the data was retrieved sequentially, the same table may be accessed multiple times, and data may be retrieved redundantly. The computational overhead associated with each database connection further slowed down performance in state of the art system. In order to diminish said drawbacks, additional caches were introduced for temporarily storing the resource score master data. Said state of the art caches had an score calculation device system wide scope and were used as cache for calculating the score in response to many requests of many different clients. As different requests may have reached the system at different moments in time, and as the resource score master data in the original data store may have meanwhile changed, a complex synchronization of said state-of-the art system wide cache with the original resource score master data was necessary.

By executing a set of stored procedures that are adapted for retrieving the resource score master data of a particular scoring scheme in parallel, the data retrieval can be accelerated significantly. As a consequence, said complex caching of state of the art systems is now obsolete. The resource score master data may be retrieved directly by the score calculation device from the database tables of the in-memory DBMS.

Using stored procedures for retrieving the resource score master data may be advantageous in particular for complex data retrieval operations, because the data retrieval is maintained centrally by the DBMS and can therefore be used by a plurality of different application programs accessing the DBMS. Code duplication can be avoided and maintaining the system may be facilitated.

According to some embodiments, the score calculation device creates a new session upon receiving the request. The score calculation device stores the resource score master data retrieved from the in-memory DBMS in response to said request in a cache in a session-specific manner. Said cache is not synchronized with the database tables of the in-memory DBMS from which the resource score master data was retrieved. As the data in the cache has session-scope, the resource score master data stored therein expires with the session and cannot be reused by other sessions for calculating a final score value in response to other requests for which said other sessions were created. This may be advantageous as such a session-specific cache does not have to be synchronized with the content of the database tables of the in-memory DBMS. In state of the art systems, the retrieved data was temporarily cached and managed by an application server for multiple users for a comparatively long time period. Data retrieval for each requesting user was impossible. The cache in state of the art systems had a scope that was usually coupled to the lifetime of the currently running instance of the application server program. Therefore, costly synchronization procedures had to be executed to keep the cached data in sync with the database. By using a cache having session-scope, a synchronization of the cache can be abandoned and processing resources are saved.

According to embodiments, for each scoring scheme managed by the score calculation device a main SQL script is identified that references a plurality of database sub-procedures. Each database sub-procedure corresponds to a respective calculation step of the scoring scheme. The main SQL script and each of the database sub-procedures may be implemented as a stored procedure of the in-memory DBMS.

According to embodiments, identifying the plurality of stored procedures assigned to the at least one scoring scheme comprises identifying a main SQL script assigned to the at least one scoring scheme and executing, by the in-memory DBMS, the identified main SQL script. Upon execution of the main SQL script, the sub-procedures referenced by said main SQL script are identified and are executed. The order of the sub-procedures referenced in the SQL main script corresponds to the order of the steps specified in the scoring scheme.

According to embodiments, each of the identified stored procedures corresponds to one of the steps of the identified scoring scheme, whereby executing said stored procedure results in the retrieving of all resource score master data required as input by said step.
Using the steps of a scoring scheme as units of parailelization may be advantageous as this information can quickly be derived when parsing the scoring scheme.

According to embodiments, each of the identified stored procedures corresponding to a sub-program of an SQL main script comprise one or more SQL select statements. Said select statements are directed at one or more tables of the in-memory DBMS. The one or more tables accessed by a particular sub-process comprise the resource score master data that is required as input by a particular one of the steps of the scoring scheme. Each of said identified stored procedures is configured to retrieve, upon execution, the resource score master data stored in one or more columns of said database table(s). At design time, the stored procedure is automatically created such that the number of individual select statements in each stored procedure is reduced as far as possible to increase performance.

According to some embodiments, at design time, the scoring scheme is analyzed for identifying one or more tables whose RSMD content is required as input by multiple steps of said scoring scheme. In this case, a stored procedure may be generated that comprises a SQL select statement for retrieving said required RSMD in a single database access query, whereby the retrieved RSMD is used by multiple steps as input. Said stored procedure may be referenced in the SQL main script by one or more steps. This may be advantageous because redundant retrieval of the same piece of RSMD from the database by different steps can be avoided. For example, if multiple steps of a scoring scheme respectively require resource score master data stored in the same database table Tbl1 (in one single column Col1 or in a set of columns {Col1, Col2, ..., Coln} of said table), only a single stored procedure may be generated at design time and may be identified at runtime that corresponds to said one table T1 and that retrieves the resource score master data from said column of said table for all said steps in the scoring scheme requiring data from table Tbl1. Said features may be advantageous as they may allow for a further reducing of the number of stored procedures and to a reduction of the corresponding number of database queries, thereby further increasing the speed of data retrieval.

According to embodiments, the score calculation device receives the RSMD from all parallel executed stored procedures immediately after the last one of said parallel executed stored procedures has terminated.

According to embodiments, the at least one scoring scheme may be one of a plurality of scoring schemes stored in the in-memory DBMS. The score calculation device calculates the final score value by means of a scoring engine. The telecommunication system further comprising a design-time module for creating and modifying the stored procedures. The design time module may be hosted by the score calculation device or another data processing device that is operatively coupled to the score calculation device. The design-time module is configured, at design time of the scoring engine, for accessing the database server for analyzing, at design time of the scoring engine and of the stored procedures, the plurality of scoring schemes stored in the in-memory DBMS. The design-time module is further configured to execute, at design time, the following steps for each of the analyzed scoring schemes:
- identifying all database tables and all columns comprising resource score master data required by any of the steps of said analyzed scoring scheme as input;
- automatically generating a plurality of stored procedures, the plurality of stored procedures being parallel executable and being configured to retrieve, when executed, the resource score master data required as input by the steps of said scoring scheme;
- assigning the generated plurality of stored procedures to the at least one scoring scheme; and
- storing the generated plurality of stored procedures in association with an identifier of said scoring scheme in a repository of the in-memory DBMS.

Said features may be advantageous as specially designed stored procedures that allow a parallelization of the retrieval of the resource score master data are generated automatically. Said procedures are also assigned automatically to the scoring scheme. Thus, any collection of scoring schemes may be provided to the design time module, the design time module will automatically create stored procedures that are specially adapted for retrieving, for each of said scoring schemes, the required resource score master data in a parallel and therefore highly efficient way.

According to embodiments, the system may comprise a graphical user interface (GUI) that enables a user to manually modify existing scoring schemes stored in the in-memory DBMS and/or to add additional scoring schemes and store them to the in-memory DBMS. The user may be enabled to trigger the execution of the analysis by the design time module via a selectable GUI element, e.g. a button.

According to embodiments, the design-time module is configured for executing, at design time and for each of the analyzed scoring schemes:
- determining that a new scoring scheme has been added to the plurality of scoring schemes in the in-memory DBMS, the new scoring scheme comprising one or more new steps, and/or determining that a new step was added to one or more of the existing scoring schemes;
- identifying all database tables and all columns comprising resource score master data required by any of the new steps;
- automatically determining, for each of the new steps, if one of the stored procedures is already capable of retrieving resource score master data required by said step;
- if none of the stored procedures is capable of retrieving resource score master data required by said new step, automatically generating a new stored procedure that is parallel executable and is configured to retrieve, when executed, the resource score master data required as input by said new step;
- assigning said new stored procedure or an existing stored procedure capable of retrieving resource score master data required by said new step to the scoring scheme comprising said new step.

This may be advantageous as adapting the system to new or modified scoring schemes or new or modified steps within existing scoring schemes is facilitated. The design time module may simply analyze all the scoring schemes or may selectively analyze the new or modified scoring schemes and may then automatically generate appropriate stored procedures that can be executed in parallel.

According to embodiments, the design-time module is configured for executing, at design time and for each of the analyzed scoring schemes:
- transforming the plurality of stored procedures assigned to said scoring scheme into a data flow graph; a 'data flow graph' as used herein is a directed graph consisting of a set of nodes and edges which both can have application-defined attributes and that may implement program code for executing database queries or evaluating and processing database query results; each of the stored procedures may be represented by an edge of said graph, each edge having assigned a name of the database table and a name of the one or more columns of said database table that comprise the resource score master data to be retrieved by said stored procedure;
- sending the data flow graph to a workflow processing engine;
- the workflow processing engine automatically combining the sent data flow graph with one or more other data flow graphs for assembling a resulting graph; and
- the workflow processing engine automatically executing the resulting graph, thereby calculating another final score value whose calculation uses the final score generated by the sent data flow graph as intermediate result; for example, a node of the resulting graph succeeds a node representing the last step of the scoring scheme underlying the sent data flow graph may use the calculated final score value of the sent data flow graph as input.

This may be advantageous as highly complex score calculations may be assembled. Different scoring schemes may be represented by a respective data flow graph. Different scoring schemes and corresponding main SQL scripts may refer to the same stored procedure implementing a shared sub-process. Thus, multiple nodes of the resulting graph assembled from multiple scoring schemes may refer to the same stored procedure but in a different procedural context. Thus, program logic can be re-used and highly complex score calculation schemes can be assembled from a limited and manageable number of stored procedures.

In a further aspect, the invention relates to a method implemented by a telecommunication system. The method is implemented by a telecommunication system comprising a score calculation device and a database server. The score calculation device is connected via the network to a plurality of client devices. The database server comprises a parallel processor configured for providing an in-memory DBMS, wherein the in-memory DBMS is coupled to the score calculation device. The method comprises, at runtime of the telecommunication system:
- the score calculation device receiving a first request from a client device, the first request comprising at least a schema-ID;
- the score calculation device identifying at least one scoring scheme associated with the first request, the at least one scoring scheme specifying a sequence of calculation steps for calculating a final resource score value, each step of the sequence of calculation steps using an intermediate result generated by a previous step as input, wherein two or more of said steps in addition respectively require resource score master data as input for calculating said step's intermediate result;
- the score calculation device identifying a plurality of stored procedures assigned to the at least one scoring scheme, the plurality of stored procedures being parallel executable and being configured to retrieve, when executed, the resource score master data required as input by the steps of the at least one scoring scheme; for example, the identification of the plurality of parallel executable stored procedures may comprise identifying, in a first step, an SQL main script that implements and is assigned to a particular scoring scheme; then, in a second step, all stored procedures that are referenced by said SQL main script are identified and used as the identified parallel executable stored procedures;
- the score calculation device triggering, by sending a single second request to the in-memory DBMS, a parallel execution of the identified stored procedures by the in-memory DBMS, the in-memory DBMS running on a parallel processor;
- the in-memory DBMS executing in parallel the identified stored procedures for retrieving all resource score master data required by the steps of the at least one scoring scheme; thereby, the parallel processor is used;
- the score calculation device receiving the retrieved resource score master data from the in-memory DBMS in a single first response;
- after having received the resource score master data, the score calculation device sequentially executing the steps of the at least one scoring scheme for calculating the final resource score value, thereby in each step taking the received resource score master data as input; and the score calculation device returning the calculated final resource score value to the one client device in a single second response.

According to embodiments, the telecommunication system further comprising a design-time module for creating and modifying the stored procedures. The plurality of scoring schemes comprise the at least one scoring scheme. The design-time module at design time of the stored procedures accesses the database server for analyzing the plurality of scoring schemes. The design time module further executes, for each of the analyzed scoring schemes at design time:
- identifying all database tables and all columns comprising resource score master data required as input by any of the steps of said analyzed scoring scheme;
- automatically generating a plurality of stored procedures, the plurality of stored procedures being parallel executable and being configured to retrieve, when executed, the resource score master data required as input by the steps of said scoring scheme; according to some embodiments, there may be created an SQL main script in addition to the parallel executable stored procedures, wherein the SQL main script is also implemented as stored procedure;
- assigning the generated plurality of stored procedures to the at least one scoring scheme; for example, this may be performed by assigning the generated SQL main script to the scoring scheme; as the SQL main script may comprise one or more references to the parallel executable stored procedures, said assignment will implicitly also assign said parallel executable stored procedures to the pricing schemes; and
- storing the generated plurality of stored procedures in association with an identifier of said scoring scheme in a repository of the in-memory DBMS.

According to embodiments, the design-time module at design time further executes, for each of the analyzed scoring schemes:
- determining that a new scoring scheme has been added to the plurality of scoring schemes in the in-memory DBMS, the new scoring scheme comprising one or more new steps, and/or determining that a new step was added to one or more of the existing scoring schemes;
- identifying all database tables and all columns comprising resource score master data required by any of the new steps;
- automatically determining, for each of the new steps, if one of the stored procedures is already capable of retrieving resource score master data required by said step;
- if none of the stored procedures is capable of retrieving resource score master data required by said new step, automatically generating a new stored procedure that is parallel executable and is configured to retrieve, when executed, the resource score master data required as input by said new step;
- assigning said new stored procedure or an existing stored procedure capable of retrieving resource score master data required by said new step to the scoring scheme comprising said new step.

According to embodiments, the generation of the plurality of stored procedures for each one of the plurality of scoring schemes comprises:
the design-time module, at design time and for each of the analyzed scoring schemes, executing:
   - transforming the plurality of stored procedures assigned to said scoring scheme into a data flow graph, wherein each of the stored procedures is represented by an edge of said graph, each edge having assigned a name of the database table and a name of the one or more columns of said database table that comprise the resource score master data to be retrieved by said stored procedure; and
   - sending the data flow graph to a workflow processing engine;
   - the workflow processing engine automatically combining the sent data flow graph with one or more other data workflow graphs for assembling a resulting graph; and
   - the workflow processing engine automatically executing the resulting graph, thereby calculating the final score value;
   - a node of the resulting graph using the calculated final score value as input, said node being a node in the resulting graph that succeeds a node representing the last step of the scoring scheme.

According to embodiments the generation of the plurality of stored procedures comprises, at design time and for each one of the plurality of scoring schemes:
- the design time module identifying all database columns and tables specified in the scoring scheme and comprising resource score master data that needs to be retrieved as input for executing the steps of said scoring scheme;
- the design time module automatically generating a plurality of parallel executable stored procedures, wherein at least for each of the steps of the pricing scheme one of the parallel executable stored procedures is generated being configured to retrieve, upon execution, the resource score master data required by said step from one or more columns of one or more database tables.

According to embodiments the generation of the plurality of stored procedures comprises, at design time and for each one of the plurality of scoring schemes:
- the design time module identifying all database tables that comprise resource score master data required as input by any one of the steps of the scoring scheme;
- for each of the identified database tables, the design time module generating a stored procedure, wherein each generated stored procedure is configured to retrieve, upon execution, the resource score master data stored in a set of columns of the database table for which the stored procedure was generated, the retrieving being executed in a single database query, wherein said set of columns consists of all columns of said database table that comprise resource score master data required as input by any one of the steps of the scoring scheme.

According to embodiments, each stored procedure comprises a single database query, the single database query configured to retrieve resource score master data from multiple columns of a single table.
In SQL language, such a query could look like *"SELECT column*_*2*, *column_5, column_7 from fable mytable where product_group_id='4239';* In such a query, data contained in multiple different columns column_2, _5 and _7 are retrieved in a single database query. For example, the in-memory DBMS may be SAP HANA. Said single database query may be implemented as an array fetch operation. Selection criteria such as a particular product_group_id may be contained in the scoring scheme and may be automatically evaluated and used at design time for creating the stored procedures and their respective SELECT statements.

According to embodiments, the receiving of the retrieved resource score master data from the in-memory DBMS by the score calculation device comprises retrieving the resource score master data directly from a data store of the in-memory DBMS. Thus, there is no cache for temporarily storing the resource score master data by the score calculation device as in state of the art systems. This may increase the performance as cache synchronization with the original data store 240 is not necessary any more.
Alternatively, the score calculation device creates a session for exchanging data with the one client device and stores the retrieved resource score master data in a cache in association with a session-ID of said session. The cache is managed by the score calculation device. The session-ID identifies a session within which the request was received by the score calculation device. The retrieved resource score master data stored in the cache is valid only during the session. The score calculation device retrieves the resource score master data from said cache and maintains the resource score master data in the cache during the session in unaltered form. Thus, also in this alternative, a time consuming synchronization of the cache is not necessary. Retrieving the data in parallel is so 'cheap' that it may be possible to retrieve the required resource score master data de novo for each dynamically determined scoring scheme identified in response to a request.

In a further aspect, the invention relates to a computer readable medium comprising instructions that when executed by a processor cause the processor to execute the steps of any one of the previous embodiments.

### Brief description of the drawings

In the following embodiments of the invention are explained in greater detail, by way of example only, making reference to the drawings in which:
**FIG. 1** is a block diagram illustrating an example embodiment of a system for resource score calculation.
**FIG. 2** is a block diagram illustrating an example embodiment of a system for accelerated resource score master database lookup.
**FIG.** 3 is a block diagram illustrating features and steps of a system and method for an accelerated lookup of a resource score master database.
**FIG. 4** is a block diagram of computer hardware that can be used in connection with the embodiments disclosed herein.
**FIG. 5** shows a scoring scheme and a corresponding set of stored procedures.
**FIG. 6** shows parallel executed threads of respective stored procedures retrieving the resource score master data.
**FIG. 7** is a flow chart of an embodiment of the method.
**FIG. 8** is a block diagram of a telecommunication system.

### Detailed description

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. Furthermore, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

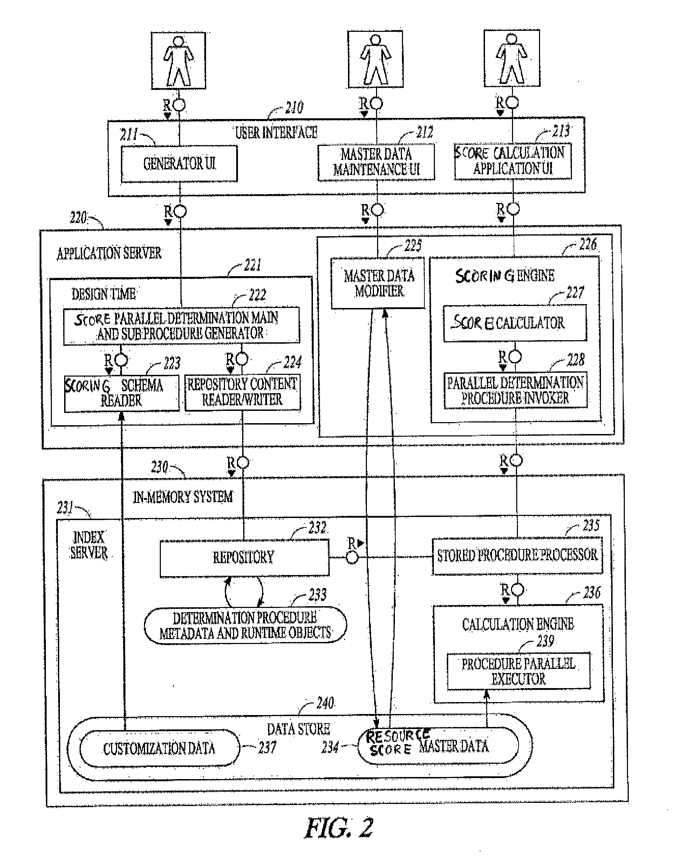

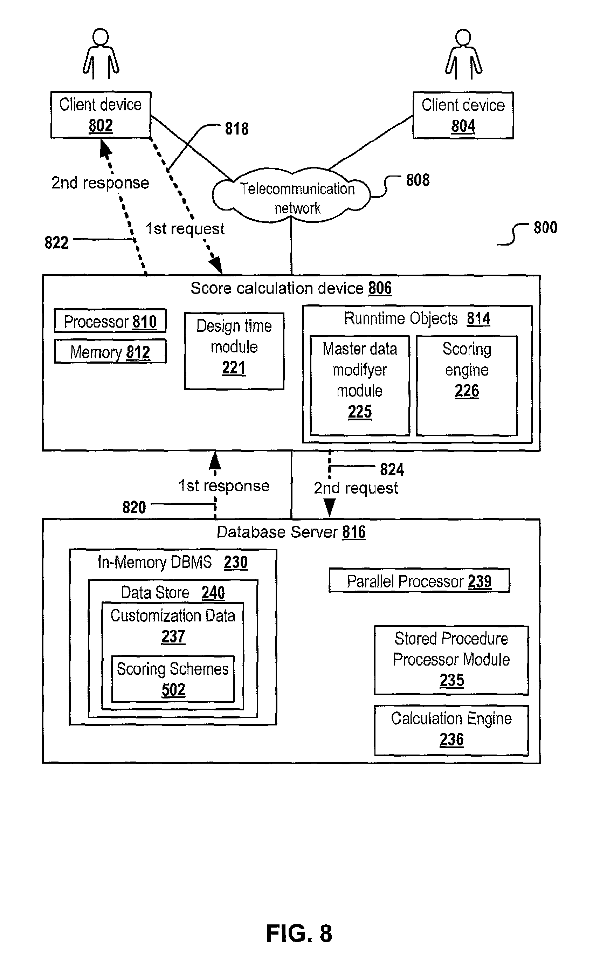

In **FIG. 8****,** an overview of a telecommunication system according to an embodiment of the invention is provided. The telecommunication system 800 may allow for a particular efficient score calculation in a telecommunication network 808. The telecommunication system comprises a score calculation device 806, 220 connected via the network to a plurality of client devices 802, 804. The system also comprises a database server 816 with a parallel processor 239 configured for providing an in-memory DBMS 230 such as SAP HANA. As the score calculation of embodiments of the invention reduce the number of request response cycles between the score calculation device and the database backend, network traffic is reduced. In addition, the data retrieval of resource score master data is accelerated as the number of database queries to the backend may be reduced. This will be described in greater detail, however, in figures 2-7.

At runtime of the system, to be more particular, at runtime of the stored procedures, the score calculation device receiving 702 a first, single request from one of the client device via the network. In response to the first request, the score calculation device identifies at least one scoring scheme which specifies a sequence of calculation steps St1-St8 for calculating a final resource score value RS_{final}.
The score calculation device sends a single second request to the in-memory DBMS for triggering a parallel execution of one or more identified stored procedures by the in-memory DBM. Although the steps in the scoring scheme depend on each other and have necessarily to be executed sequentially, the input required by all of said steps is not requested sequentially from the DBMS, but raster in a single second request sent to the database backend. A plurality of stored procedures of said database is identified that is associated, e.g. by a mapping, to the currently executed scoring scheme. Using stored procedures is advantageous, as multiple clients may make use of a shared set of stored procedures. In addition, there is only little computational overhead associated with calling stored procedures of a database. Further, the stored procedures are executed in parallel on a parallel processor 239. The in-memory DBMS returns the retrieved resource score master data in a first response to the score calculation device that uses the received data for sequentially calculating the final score in accordance with the scoring scheme associated with the request. The calculated final score is returned to the requesting client in a second response.

Thus, the resource score requested in the first request can be calculated by the score calculation device 806 rapidly and with a very small number of request-response cycles.

An embodiment of an accelerated resource score master database lookup is based on the independence of resource score master data. That is, many a time, the individual steps that are used in a resource score master data lookup in a scoring scheme are independent of each other. A sequential relation exists among such independent steps only during an actual score calculation (e.g., planning or configuration of a machine may involve adding a plurality of optional components or consumables to the machine, each added component increasing or decreasing the suitability of the machine to perform a specific task, and/or increasing or decreasing some other aspects of the machine. Each machine sub-component relating to a step in the scoring scheme and/or each other criterion that relates to a step in the scoring scheme may have a relative impact on the final score. This means that any calculated intermediate score is increased or decreased by a percentage value, not by an absolute score value. In such a situation, that is commonly the case in resource score calculation system, the calculation of the final resource score has to be executed sequentially).

In an embodiment disclosed herein, this situation is exploited to accelerate the master data lookup in a score calculation. The embodiment generates database procedures for scoring schemes so that each step of the scoring schemes is represented by a stored procedure that encapsulates all the associated database queries that correspond to that particular step, i.e., all the associated database queries that are necessary for retrieving the resource score master data used as input by said step. Since each step is independent of other steps, such procedures can be run in a highly parallelized environment of an in-memory DBMS that supports such a parallelization. An example of such a database is the HANA® in-memory DBMS of SAP. With this approach, resource score master database look-ups are faster since they execute in parallel. This avoids the necessity to cache the look-up data results. Consequently, memory usage will be reduced, system stability will be improved, and response time will be improved.

In another embodiment, the resource score master database lookup is further accelerated by grouping all database queries directed at the same database table (for multiple steps that may use the same database table), and doing a single database query per table, e.g. in the form of an array fetch operation.

There are several advantages to such a system. It avoids memory usage that is involved with caching resource score master data according to state of the art systems, thereby reducing the total cost of ownership (TCO). It provides a faster response time during business transaction processing (*i.e.*, order processing, invoicing, *etc.*). Since caching can be avoided, a highly complex cache management service is not needed. Such cache management services usually occupy system resources during high load context and affect system stability. For example, many records are fetched and put into cache, which causes cache overflow, which then requires a cleanup of the cache. Additionally, as noted above, the cache has to mirror the resource score master database, but at times, data can be missing from the cache. When data is missing, the data has to be fetched again and put into cache. System resources are then occupied by these types of services, and this negatively affects the efficacy of the system to handle critical business processes. One or more embodiments of an accelerated resource score master data lookup avoid these situations.

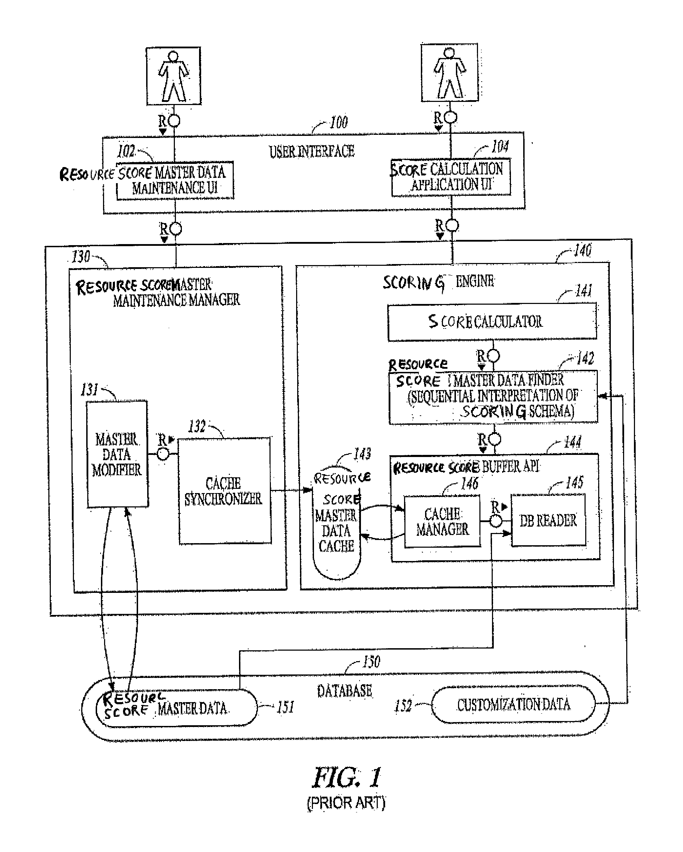

Referring to **FIG. 1****,** which is a block diagram of a resource score calculation system that uses cache technology, a user interface **100** includes a resource score master data maintenance user interface **102** and a score calculation user interface 104. The resource score master data maintenance user interface 102 permits a user to update, correct, modify, and generally maintain the resource score master data 151 in the database 150. This is accomplished via a connection with a master data modifier 131 of a resource score master maintenance manager 130.

The score calculation application user interface 104 permits a user to request a score calculation. The score calculation request is received by a scoring engine 140. The scoring engine 140 includes a resource score master data finder 142. The resource score master data finder 142 interprets in a sequential manner the scoring scheme that is being handled by the system. The resource score master data finder 142 also retrieves customized data 152 from the database 150. The score buffer application program interface (API) 144 obtains the scoring data needed for the score calculation from cache manager 146 and resource score master data cache 143, and the score calculator 141 uses this scoring data to calculate the final score value.

As noted above, the resource score master data cache 143 has to be kept up to date with the resource score master data 151. For example, when the master data modifier 131 executes an update of the resource score master data 151, it also has to update the resource score master data cache 143 via the cache synchronizer 132. When data has been changed in the resource score master data 151, the cache manager 146 uses the database reader 145 to retrieve the updated data from the resource score master data 151.

As further noted above, this process of maintaining the resource score master data cache 143 is resource intensive and slows the system response time. Specifically, it is evident from FIG. 1 that there is no parallelization ability and resource score master data have to be cached at an score calculation device layer in order to meet key performance indicators (KPI). However, as noted, keeping the cache up-to-date requires synchronization activity, and that could, and usually does, result in inconsistencies between the resource score master database 151 and the resource score master data cache 143. Also, synchronization of the resource score master database 151 and the resource score master data cache 143 takes up score calculation device resources (CPU and memory), especially when there is a mass update of resource score master data, which is not uncommon. In this context, each step in the scoring scheme (customization object) has to be processed sequentially, and the scoring engine has to trigger structured query language (SQL) sequentially to find the resource score master data that correspond to each step in the scoring scheme.

So, as is apparent from FIG. 1, in current score calculation systems, conditions that are required for different scoring procedures are determined sequentially. However, condition type accesses (between condition types) are normally independent of each other. Consequently, in an embodiment, a parallel condition determination is made at an item level using an in-memory DBMS with parallelization capabilities.

**FIG. 2** is a block diagram of an embodiment that implements a parallelization approach to resource score calculations using an in-memory DBMS with parallelization capability. The system of FIG. 2 at design time generates stored procedures and stores the generated stored procedures in a repository 232 of the in-memory DBMS. Since these generated stored procedures can be executed in parallel (using in-built capabilities of the in-memory DBMS), a cache 143 does not have to be maintained at the score calculation device 220, and there is no more complexity caused by cache synchronization during resource score master data modification. Consequently, score calculation device resources are saved and there is a better response time during score calculation due to the parallelization provided by a multi-core architecture of an in-memory DBMS.

More specifically, FIG. 2 illustrates a user interface 210 that includes a generator user interface 211, a resource score master data maintenance user interface 212, and a score calculation application user interface 213. The generator user interface may allow a user to control and configure the design time module 221 at design time for creating the stored procedures. The resource score master data maintenance user interface 212 may allow a user, e.g. an operator of the in-memory DBMS, to modify existing scoring schemes stored as customization data 237 in the data store 240 or to add new scoring schemes to said store. The score calculation application user interface 213 may allow a user to monitor the calculation of the score in response to the request at runtime and/or to inspect some log files that reveal previously received requests and the respectively calculated final resource score value. A score calculation device 220 is coupled to the user interface 210, and an in-memory DBMS 230 is coupled to the score calculation device 220.

The score calculation device includes a module for automatically generating the stored procedures. Said module is referred to in Fig. 2 as "sub-procedure generator module 222" that is within the design time module 221. The sub-procedure generator module 222 is for generating a plurality of stored procedures respectively comprising one database query for retrieving resource score master data 234 from the data store 240. All stored procedures assigned to a particular scoring scheme 502 are capable of being executed in parallel. The sub-procedure generator module 222 reads one scoring scheme 502 from a plurality of scoring schemes stored as customization data 237 in the data store 240. The scoring scheme is read via a scoring scheme reader module 223, which permits a user to determine the scoring schemes that are currently stored, together with some optional configuration data, as customization data 237 in data store 240. The sub-procedure generator module 222 stores a multitude of stored procedures in a repository 232 of the in-memory DBMS 230. The repository 232 may be a repository of a module of the DBMS used for managing stored procedures. For example, the repository may be a repository of an index server 231 of an in-memory DBMS such as HANA.

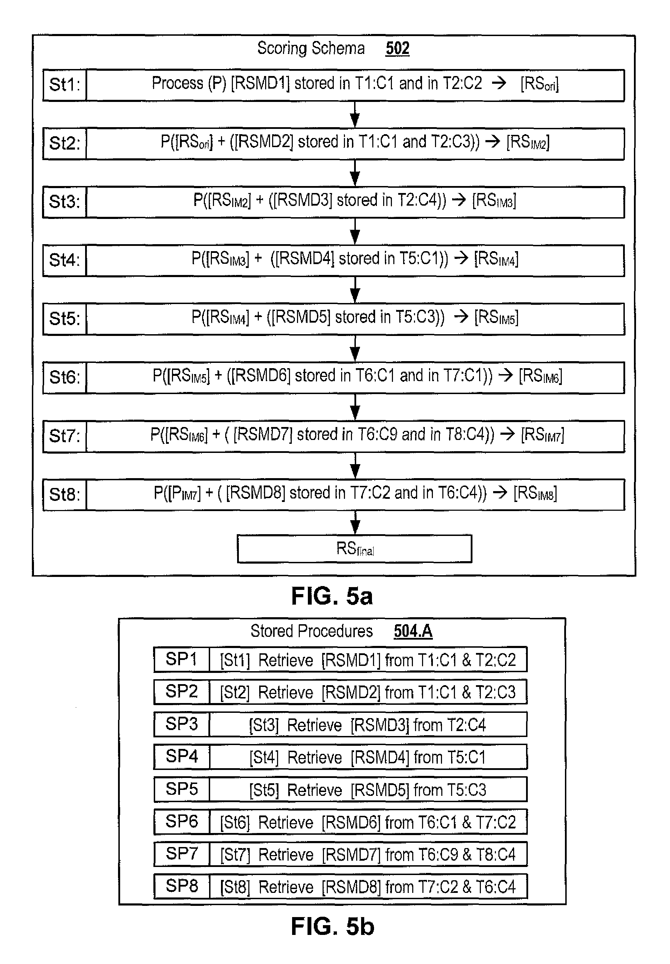

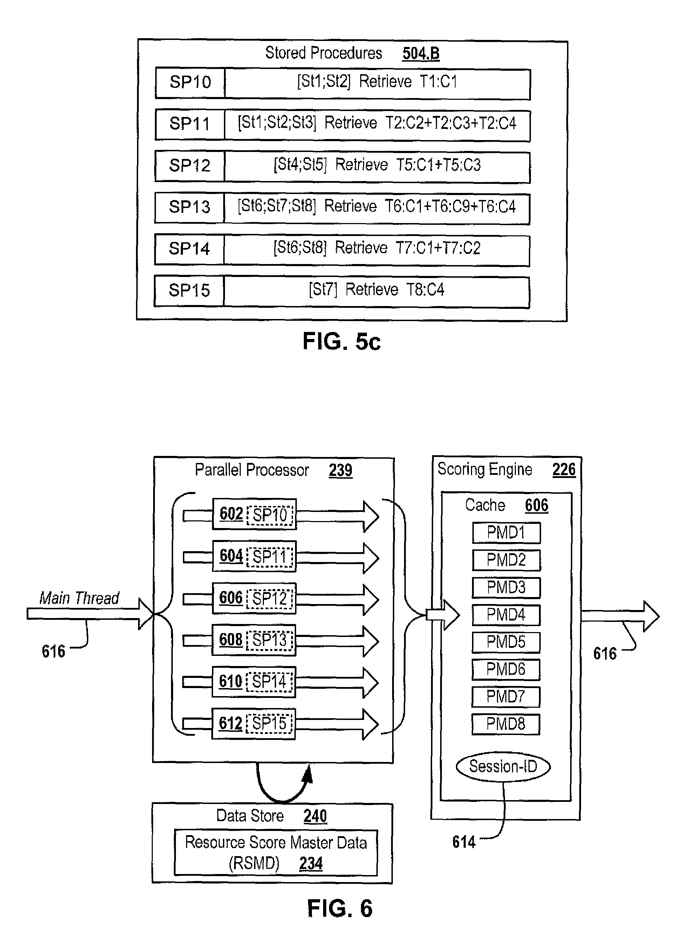

The score calculation device 220 further includes a scoring engine 226, which includes a score calculator module 227 and a module referred to as "parallel determination procedure invoker 228". The score calculation device 220 also includes a master data modifier module 225, which modifies resource score master data 234 stored in a data store of the in-memory database. The data store 240 may be managed and controlled by the index server 231. The index server 231 stored procedure processor module 235. The stored procedure processor module 235 communicates with the repository 232 and the calculation engine 236. The calculation engine 236 includes a parallel processor 239, e.g. a multi-core CPU of a computer. The parallel processor may be configured to communicate in parallel with the data repository 240 comprising the resource score master data 234. The repository 232 of the index server 231 communicates with meta data and runtime objects 233. The runtime objects 233 are the executable runtime objects implementing the stored procedures (depicted, for example, in Fig. 5).

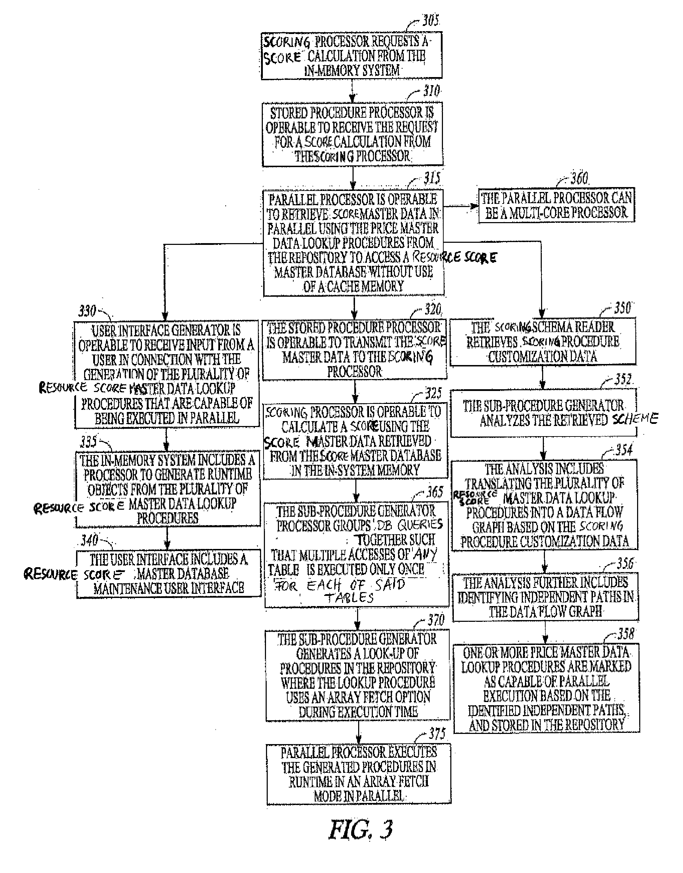

FIG. 3 is a block diagram of example operations and features of a system for resource score master database lookup. FIG. 3 includes a number of operation and feature blocks 305 - 375. Though arranged in both a branch and serial fashion in the example of FIG. 3, other examples may reorder the blocks, omit one or more blocks, and/or execute two or more blocks in parallel using multiple processors or a single processor organized as two or more virtual machines or sub-processors. Moreover, still other examples can implement the blocks as one or more specific interconnected hardware or integrated circuit modules with related control and data signals communicated between and through the modules. Thus, any process flow is applicable to software, firmware, hardware, and hybrid implementations.

At 305, the scoring engine 226 requests a score calculation from the in-memory DBMS 230. At 310, the stored procedure processor module 235 is operable to receive the request for a score calculation from the scoring engine 226. The store procedure processor 235 is further operable to access the repository 232 of resource score master data lookup procedures, and to provide the resource score master data lookup procedures to the parallel processor 239. At 315, the parallel processor 239 is operable to retrieve resource score master data in parallel using the resource score master data lookup procedures from the repository 232 to access a resource score master data 234 without use of a cache memory. At 320, the stored procedure processor 235 is operable to transmit the resource score master data to the scoring engine 226. At 325, the scoring engine 226 is operable to calculate a score using the resource score master data retrieved from the resource score master database in the in- memory DBMS 230.

As noted above, and again at 330, the user interface 210 includes a user interface generator 211. The user interface generator 211 is operable to receive input from a user in connection with the generation of the plurality of stored procedures that are capable of being executed in parallel. For example, the user interface generator 211 can receive a request to create procedures to generate a score. The scoring scheme reader module 223 retrieves customization data 237 for generating stored procedures. The retrieved scoring schemes can relate to for example a special score calculation for a particular machine type or for a particular customer having requested the score calculation. Using the retrieved scoring scheme, the sub procedure generator module 222 creates the sub procedures, and writes the sub procedures to the repository 232 via the repository content writer 224. At 335, it is noted that the in-memory DBMS 230 includes a processor 233 to generate runtime objects from the plurality of stored procedures for retrieving the resource score master data.

As further noted above, and also at 340, the user interface 210 can include a resource score master database maintenance user interface 212. As illustrated in FIG. 2, the resource score master database maintenance user interface 212 enables a user to access and/or modify the resource score master data 234 stored in data store 240 of the in-memory DBMS 230 via a resource score master data modifier processor module 225 in the score calculation device 220. The master data modifier module 225 permits a user to create and/or modify resource score master data 234.

As further noted above, a multitude of stored procedures for retrieving resource score master data can be generated, and these stored procedures are capable of being executed in parallel. The details of generating the resource score master data lookup procedures that can be executed in parallel are illustrated in blocks 350-358. At 350, the scoring scheme reader module 223 retrieves a scoring scheme being part of the customization data 237 to generate the stored procedures. At 352, the sub-procedure generator module 222 analyzes the retrieved scoring schemes 237, 502 (Fig. 5). This analysis includes translating a plurality of stored procedures into a data flow graph based on the scoring scheme at step 354, and identifying independent paths in the data flow graph at 356. At 358, one or more stored procedures are marked as capable of parallel execution based on the identified independent paths. These marked resource score master data lookup procedures are then stored in the repository **232.**

At **360,** it is illustrated that the parallel processor can be a multi-core processor. At 365, it is noted that the sub-procedure generator processor module 222 can be configured to group multiple database queries directed at the same table together such that multiple columns of said table are accessed only once in a single database query (corresponding to a single stored procedure) for all steps in the scoring scheme that require data from said table. For example, multiple steps in a scoring scheme can access the same table with different filter conditions. Consequently, stored procedures are generated such that a plurality of database queries used in state-of-the art systems for retrieving the resource score master data for said multiple steps are combined with single query with an array fetch option. This is explained in detail in the description of Fig. 5.
Then, independent table array fetch operations in each of the stored procedures will be parallelized. At 370, it is illustrated that the sub procedure generator module 222 can be configured to generate stored procedures and store the stored procedures in the repository 232 wherein the stored procedure can use an array fetch option during execution time. At 375, parallel processor 239 executes the generated procedures during runtime in an array fetch mode in parallel. More specifically, special configuration is only required with the sub procedure generator module 222. The sub procedure generator module 222 does not execute the generated stored procedure. Rather, the sub procedure generator module 222 simply generates the program artifacts that can be executed in the in-memory DBMS 230. The parallel processor 239 at a later time executes the generated stored procedures during execution time in a parallel mode.

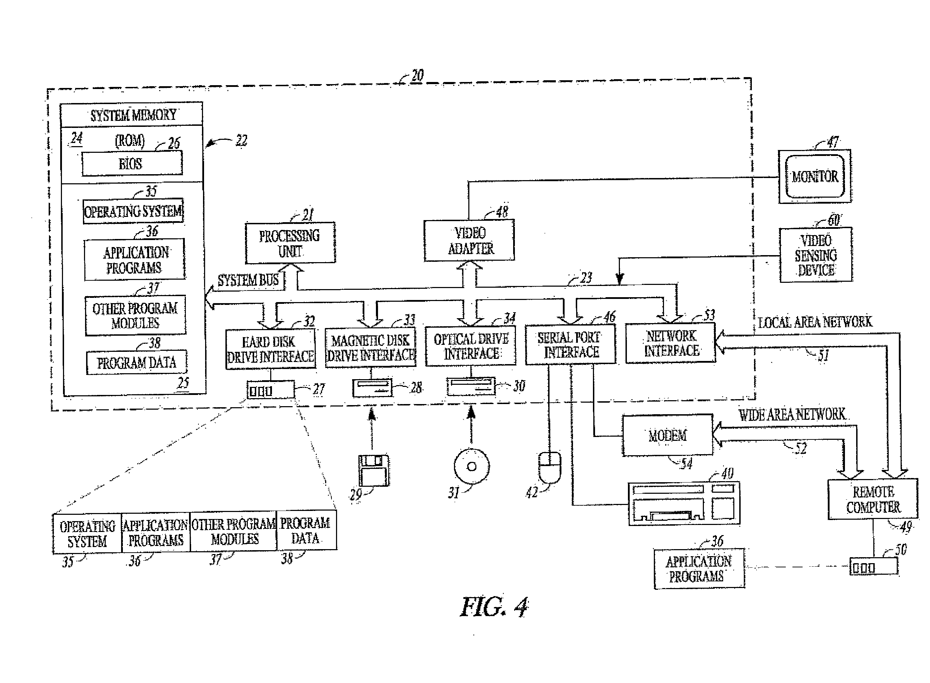

**FIG. 4** is an overview diagram of hardware and an operating environment in conjunction with which embodiments of the invention may be practiced. The description of **FIG. 4** is intended to provide a brief, general description of suitable computer hardware and a suitable computing environment in conjunction with which the invention may be implemented. In some embodiments, the invention is described in the general context of computer-executable instructions, such as program modules, being executed by a computer, such as a personal computer. Generally, program modules include routines, programs, objects, components, data structures, etc., that perform particular tasks or implement particular abstract data types.

Moreover, those skilled in the art will appreciate that the invention may be practiced with other computer system configurations, including hand-held devices, multiprocessor systems, microprocessor-based or programmable consumer electronics, network PCS, minicomputers, mainframe computers, and the like. The invention may also be practiced in distributed computer environments where tasks are performed by I/O remote processing devices that are linked through a communications network. In a distributed computing environment, program modules may be located in both local and remote memory storage devices.

In the embodiment shown in **FIG. 4****,** a hardware and operating environment is provided that is applicable to any of the servers and/or remote clients shown in the other Figures. As shown in **FIG. 4****,** one embodiment of the hardware and operating environment includes a general purpose computing device in the form of a computer 20 (e.g., a personal computer, workstation, controller, or server), including one or more processing units 21, a system memory 22, and a system bus 23 that operatively couples various system components including the system memory 22 to the processing unit 21. There may be only one or there may be more than one processing unit 21, such that the processor of computer 20 comprises a single central-processing unit (CPU), or a plurality of processing units, commonly referred to as a multiprocessor or parallel-processor environment. A multiprocessor system can include cloud computing environments. In various embodiments, computer 20 is a conventional computer, a distributed computer, or any other type of computer.

The system bus 23 can be any of several types of bus structures including a memory bus or memory controller, a peripheral bus, and a local bus using any of a variety of bus architectures. The system memory can also be referred to as simply the memory, and, in some embodiments, includes read-only memory (ROM) 24 and random-access memory (RAM) 25. A basic input/output system (BIOS) program 26, containing the basic routines that help to transfer information between elements within the computer 20, such as during start-up, may be stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 couple with a hard disk drive interface 32, a magnetic disk drive interface 33, and an optical disk drive interface 34, respectively. The drives and their associated computer-readable media provide non volatile storage of computer-readable instructions, data structures, program modules and other data for the computer 20. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), redundant arrays of independent disks (e.g., RAID storage devices) and the like, can be used in the exemplary operating environment.

A plurality of program modules can be stored on the hard disk, magnetic disk 29, optical disk 31, ROM 24, or RAM 25, including an operating system 35, one or more application programs 36, other program modules 37, and program data 38. A plug in containing a security transmission engine for the present invention can be resident on any one or number of these computer-readable media.

A user may enter commands and information into computer 20 through input devices such as a keyboard 40 and pointing device 42. Other input devices (not shown) can include a microphone, joystick, game pad, satellite dish, scanner, or the like. These other input devices are often connected to the processing unit 21 through a serial port interface 46 that is coupled to the system bus 23, but can be connected by other interfaces, such as a parallel port, game port, or a universal serial bus (USB). A monitor 47 or other type of display device can also be connected to the system bus 23 via an interface, such as a video adapter 48. The monitor 40 can display a graphical user interface for the user. In addition to the monitor 40, computers typically include other peripheral output devices (not shown), such as speakers and printers.

The computer 20 may operate in a networked environment using logical connections to one or more remote computers or servers, such as remote computer 49.

These logical connections are achieved by a communication device coupled to or a part of the computer 20; the invention is not limited to a particular type of communications device. The remote computer 49 can be another computer, a server, a router, a network PC, a client, a peer device or other common network node, and typically includes many or all of the elements described above I/O relative to the computer 20, although only a memory storage device 50 has been illustrated. The logical connections depicted in **FIG. 4** include a local area network (LAN) 51 and/or a wide area network (WAN) 52. Such networking environments are commonplace in office networks, enterprise-wide computer networks, intranets and the internet, which are all types of networks.

When used in a LAN-networking environment, the computer 20 is connected to the LAN 51 through a network interface or adapter 53, which is one type of communications device. In some embodiments, when used in a WAN-networking environment, the computer 20 typically includes a modem 54 (another type of communications device) or any other type of communications device, e.g., a wireless transceiver, for establishing communications over the wide-area network 52, such as the internet. The modem 54, which may be internal or external, is connected to the system bus 23 via the serial port interface 46. The resource planning master data may be price master data. The scoring engine 140 may be a pricing engine. The step-specific price master data may be a country-specific tax or the like. The final resource score value may be a final price. According to embodiments, the score calculation device may be an application server, i.e., a server computer that hosts some score calculation device software that provides one or more application programs that may receive requests from client computers via a network. The intermediate result values may be intermediate price values after taking into account, for example, country-specific taxes. In a networked environment, program modules depicted relative to the computer 20 can be stored in the remote memory storage device 50 of remote computer, or server 49. It is appreciated that the network connections shown are exemplary and other means of, and communications devices for, establishing a communications link between the computers may be used including hybrid fiber-coax connections, T1-T3 lines, DSL's, OC-3 and/or OC-12, TCP/IP, microwave, wireless application protocol, and any other electronic media through any suitable switches, routers, outlets and power lines, as the same are known and understood by one of ordinary skill in the art.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus the following claims are hereby incorporated into the Description of the Embodiments, with each claim standing on its own as a separate example embodiment.

**FIG. 5a** shows a scoring scheme 502 and a corresponding set 504 of stored procedures SP1-SP8 having been generated by analyzing the steps St1-St8 of the scoring scheme 502. The scoring scheme 502 may be specific for a particular customer, customer group, product group or the like. The scoring scheme is an electronic document that can be specified and stored for example as an XML file, as a comma separated file, as a database record or as a data object of an object oriented programming language. The scoring scheme 502 specifies a sequence of calculation steps St1 - St8 that have to be executed in a sequential order for calculating a final resource score value RS_{final}. The sequential order is enforced by some or all of the steps using an intermediate result RSₒᵣᵢ, RS_{IM2}, RS_{IM3}, RS_{IM4}, RS_{IM5}, ..., RS_{IM7} as input for calculating their respective intermediate result (or the final result in case of step St8). The scoring scheme comprises, for each of the steps, an indication of one or more tables and of the one or more respective columns per table that comprise the resource score master data that are required by said step is input. In addition to the intermediate result generated by the previous step (if any), most of or all of the steps may use additional data, so called 'resource score master data' (RSMD) as input. The resource score master data is retrieved from a data store 240 that is part of the in-memory DBMS 230 and comprises the resource score master data 234 (see Fig. 2). For example, step St1 requires resource score master data RSMD1 as input for determining a starting score value. In fact, RSMD1 may in this case be a default score value RSₒᵣᵢ that needs to be retrieved as the basis for executing the subsequent steps St2-St8.
Step St2 uses resource score master data RSMD2 and the retrieved default score RSₒᵣᵢ as input for calculating a modified resource score value RS_{IM2} as intermediate result. Said intermediate result RS_{IM2} is a modified resource score that takes into consideration e.g. some customer specific or product specific or default machine quality value RSMD2. For example, the score value of a machine could be increased if the manufacturer is considered as a high-quality manufacturer or if the machine has been tested and identified of operating reliably. Thus, the resource score master data RSMD2 must be retrieved from the data store 240 in order to calculate the intermediate result RS_{IM2} in step St2.

RS_{IM2}, together with additional resource score master data RSMD3, may be used as input in step St3 for calculating a further intermediate result RS_{IM3}. RSMD3 may be a (customer specific, product specific, country specific, default, etc...) percentage value for decreasing or increasing intermediate result RS_{IM3}. For example, if a machine is used outside of a building, the existence of a protective coating may have an impact on the weather-resistance of the machine and also may have an impact on the final resource score to be calculated. Thus, RSMD3 also has to be retrieved from data store 240. And so forth for steps St4-St8 where additional factors that may have an impact on the final resource score value are retrieved as input from the data store 240.

While in state of the art systems depicted in Fig. 1 the resource score master data RSMD1-RSMD8 was retrieved in a sequential order, embodiments of the invention retrieve all the resource score master data RSMD1-RSMD8 in parallel. All resource score master data RSMD1-RSMD8 required by any one of the steps of the scoring scheme is retrieved from the data store 240 by means of stored procedures before the sequence of steps specified in the scoring scheme is started to execute.

In order to allow for said parallel execution of the stored procedures, specially adapted stored procedures have to be generated. This is done automatically by a design time module 221 of Fig. 2 that was already described previously. The customization data 237 stored in data store 240 may comprise a plurality of scoring schemes 502. Each scoring scheme comprises, for each of its steps, an indication of one or more tables and of one or more respective columns per table that comprise the resource score master data required by said step is input. Thus, by analyzing said information in the scoring scheme, the design time module 221 may automatically identify the tables and columns that need to be accessed for retrieving the totality of resource score master data required by a particular scoring scheme 502. The design time module is thus able to automatically identify the tables and columns comprising the relevant resource score master data for a particular scoring scheme, and to automatically generate stored procedures which are optimized for retrieving said data in a highly performant, parallel way.

The design time module 221 assigns the stored procedures that have been generated based on the analysis of a particular scoring scheme 502 to said scoring scheme 502. This may be advantageous as this allows, upon receiving a request of a customer having assigned said scoring scheme, to selectively execute the stored procedures assigned to said dynamically identified scoring scheme. Only a small subset of the totality of the resource score master data actually available in the data store 240 may be retrieved in response to the request. As a consequence, the retrieval of the required RSMD and the calculation of the final resource score value based on said retrieved RSMD can be executed very quickly. The retrieved RSMD may be stored only temporarily for a single session. Said session may be generated upon receipt of the request. Retrieving and caching RSMD for a single user session is made possible by the fact that parallel retrieval of the RSMD can be executed very fast and that a system-wide caching of all available RSMD is not necessary any more.

**Fig. 5b** shows a set 504.A of stored procedures that are automatically generated by the design time module 221 upon analyzing the scoring scheme 502 according to one embodiment. In said embodiment, each step in the scoring scheme results in exactly one generated stored procedure. For each of the 8 steps St1-St8 of the scoring scheme, a respective stored procedure SP1-SP8 was automatically generated. The 8 stored procedures are executed at runtime in parallel on the parallel processor 239. Each of the stored procedures may comprise one or more database queries. For example, stored procedure SP5 generated for step St5 implements on-ly a single database query for retrieving RSMD5 from column C3 of table T5. As a further example, stored procedure SP4 generated for step St4 implements only a single database query for retrieving RSMD4 from column C1 of table T5. Stored procedure SP8 generated for step St8 implements two database queries: one query for retrieving a first part of RSMD8 from column C2 of table T7, and another query for retrieving a second part of RSMD8 from column C4 of table T6. The index server will evaluate, at runtime of the in-memory DBMS, if said two queries can be executed in parallel, and will execute both database queries in parallel on the parallel processor 239 if possible. Thus, a high degree of parallelization is reached.

**Fig. 5c** shows another embodiment that creates one stored procedure for each table comprising RSMD that is used as input by any one of the steps of said scoring scheme. In particular, Fig. 5c shows a set 504.B of stored procedures SP10-SP15that are automatically generated by the design time module 221 upon analyzing the scoring scheme 502. Although the scoring scheme comprises 8 steps, only six stored procedures are generated for retrieving all resource score master data required for calculating the final resource score value RS_{final}. Preferentially, each stored procedure SP1 - SP8 corresponds to and implements only a single database query that is operable to retrieve all relevant data from a particular database table in a single step (also in case the data is stored in multiple different columns of said table and also in case multiple different steps require resource score master data stored in said table).

For example, stored procedure SP11 retrieves, in a single step, resource score master data stored in columns C2, C3 and C4 of table T2. The data retrieved from column C2 are required by step St1 while the data retrieved from column C3 are required by step St2. Stored procedure SP12 retrieves, in a single step, resource score master data stored in columns C1 and C3 of table T5 (the index of the column names as used herein is started de novo for each table, so column C3 of table T2 is a different column than C3 of table T5). The data retrieved from columns C1 of T5 are required by step St4 while the data retrieved from column C3 of T5 are required by step St5. And so forth. This may significantly speed up the data retrieval, because only a single database query may be necessary for each table comprising relevant RSMD.

The number of tables and columns comprising the relevant resource score master data for each step may be much larger than the number of tables and columns given in the embodiment depicted in Fig. 5. The higher the number of tables and columns that need to be accessed for retrieving the relevant resource score master data for a scoring scheme, i.e., the more complex the calculation of the final resource score value, the higher is usually the performance gain obtained by querying all relevant resource score master data contained in a single table (in one or more columns) in a single stored procedure executing single database query.

**FIG. 6** shows parallel execution of the stored procedures SP1-SP6 generated for and assigned to the scoring scheme 502 as depicted in Fig. 5c (parallel execution of stored procedures SP1-SP8 is executed analogously and is therefore not shown in a corresponding figure).
At runtime of the score calculation device and after having received a request of a customer for a final resource score value, the scoring engine may start executing a main thread 616. Executing the main thread 616 may comprise evaluating a schema-ID contained in the request for determining the scoring scheme 502 that should be the basis for calculating the requested final resource score value for the customer. The identified scoring scheme 502 has assigned six stored procedures SP10-SP15. Said stored procedure had been generated previously, at design time, by a design time module 221 for said scoring scheme 502. For example, the procedure invoker module 228 of the scoring engine 226 of the score calculation device may access repository 232 of the in-memory DBMS 230 for identifying the stored procedures SP10-SP15 assigned to the identified scoring scheme 502. Then, the module 228 triggers a parallel execution of the identified stored procedures SP10-SP15 by a stored procedure processor module 235 that executes each of the stored procedures in a respective thread 602-6012 on a parallel processor 239.
After having executed all parallel threads 602-6012, all resource score master data required by the steps St1-St8 of scheme 502 have been loaded from data store 240 into a cache 606 that is managed by the score calculation device 220. The resource score master data having been retrieved and stored into the cache in response to the request may have assigned a session ID 614 of a session associated with the request. For example, the session associated with the request may be a session that is generated in response to receiving the request or may be a session having been generated previously, e.g. when the client device of the customer and the score calculation device 220 established a communication channel for exchanging data.

After having retrieved all required data, the scoring engine 226 continues executing the main thread 616, thereby executing all steps St1-St8 in a sequential manner and using the cached resource score master data RSMD1-RSMD8 as input. As a result, a final resource score value RS_{final} is calculated in accordance with scoring scheme 502. The final resource score value RS_{final} is returned to the client device of the customer having submitted the request. Then, the session may be closed and the resource score master data RSMD1-RSMD8 in the cache 606 may be erased or overwritten by other data.

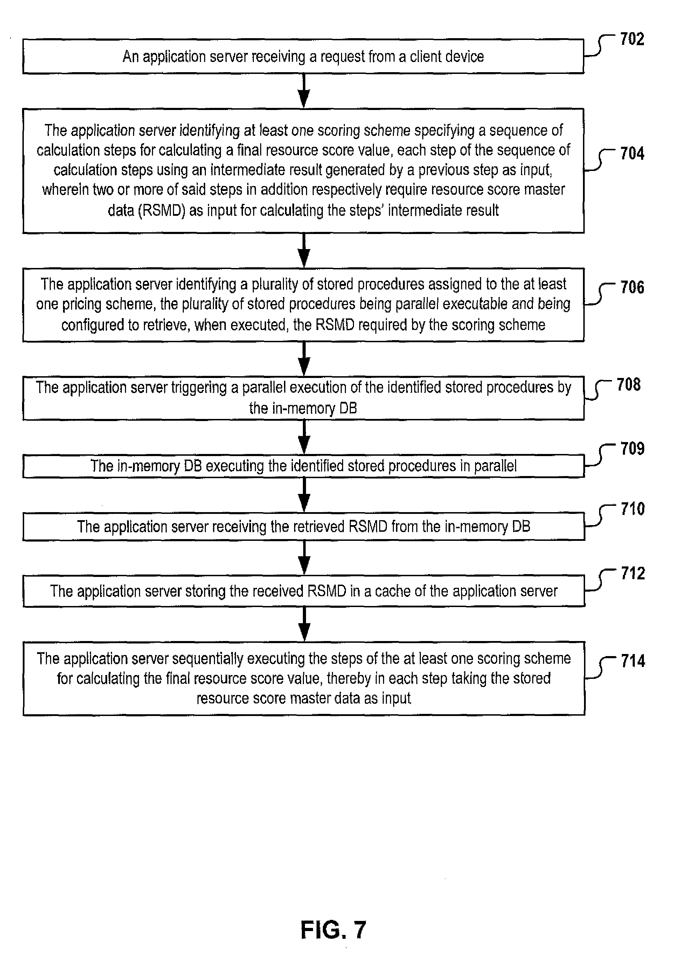

**FIG. 7** is a flow chart of an embodiment of the method implemented by the telecommunication system. Said method may be a computer-implemented method. At runtime of a score calculation device 220 and of an in-memory DBMS 230 depicted, for example, in Fig. 2, the score calculation device executes the following steps:
- a step 702 of receiving a request from a client device, the request comprising at least a schema-ID;
- a step 704 of identifying at least one scoring scheme 502 associated with the schema-ID, the at least one scoring scheme specifying a sequence of calculation steps St1-St8 for calculating a final resource score value RS_{final}, each step of the sequence of calculation steps using an intermediate result RSₒᵣᵢ, RS_{IM2}, RS_{IM3}, RS_{IM4}, RS_{IM5}, RS_{IM6}, RS_{IM7}, RS_{IM8} generated by a previous step as input, wherein two or more of said steps in addition respectively require resource score master data 234, RSMD1-RSMD8 as input for calculating said step's intermediate result;
- the score calculation device identifying 706 a plurality of stored procedures assigned to the at least one scoring scheme, the plurality of stored procedures being parallel executable and being configured to retrieve, when executed, the resource score master data required as input by the steps of the at least one scoring scheme;
- the score calculation device triggering 708 a parallel execution of the identified stored procedures by the in-memory DBMS 230, the in-memory DBMS running on a parallel processor 239;
- the in-memory DBMS using 710 the parallel processor for retrieving all resource score master data required by the steps of the at least one scoring scheme in parallel;
- the score calculation device receiving 712 the retrieved resource score master data from the in-memory DBMS;
- the score calculation device storing 714 the received resource score master data in a cache of the score calculation device;
- after having received and stored the resource score master data, the score calculation device sequentially executing 716 the steps of the at least one scoring scheme for calculating the final resource score value RS_{final}, thereby in each step taking the stored resource score master data as input.

## Claims

1. A telecommunication system (800) for efficient score calculation in a telecommunication network (808), the telecommunication system comprising a score calculation device (806, 220) connected via the network to a plurality of client devices (802, 804), the telecommunication system further comprising a database server (816), the database server comprising a parallel processor (239) configured for providing an in-memory DBMS (230), wherein the in-memory DBMS is accessible by the score calculation device via the network, wherein at runtime, the system is configured for:
- the score calculation device receiving (702) a first request from one of the client devices;
- the score calculation device identifying (704) at least one scoring scheme (502) associated with the first request, the at least one scoring scheme specifying a sequence of calculation steps (St1-St8) for calculating a final resource score value (RS_{final}), each step except the first step of the sequence of calculation steps using an intermediate result (RSₒᵣᵢ, RS_{IM2}, RS_{IM3}, RS_{IM4}, RS_{IM5}, RS_{IM6}, RS_{IM7}, RS_{IM8}) generated by a previous step as input, wherein two or more of said steps in addition respectively require resource score master data (234, RSMD1-RSMD8) as input for calculating said step's intermediate result;
- the score calculation device identifying (706) a plurality of stored procedures (SP1-SP8; SP10-SP15) being assigned to the at least one scoring scheme and being stored in the in-memory DBMS, the plurality of stored procedures being parallel executable and being configured to retrieve, when executed, the resource score master data required as input by the steps of the at least one scoring scheme;
- the score calculation device triggering (708), by sending a single second request to the in-memory DBMS, a parallel execution of the identified stored procedures by the in-memory DBMS;
- the in-memory DBMS executing (709) in parallel said stored procedures for retrieving all resource score master data required by the steps of the at least one scoring scheme;
- the score calculation device receiving (710) the retrieved resource score master data from the in-memory DBMS in a single first response;
- after having received the resource score master data, the score calculation device sequentially executing (714) the steps of the at least one scoring scheme for calculating the final resource score value (RS_{final}), thereby in each step taking at least parts of the received resource score master data as input; and
- the score calculation device returning the calculated final resource score value (RS_{final}) to the one client device in a single second response.

2. The telecommunication system of claim 1, wherein each of the identified stored procedures (SP1-SP8) corresponds to one of the steps (St1-St8) of the identified scoring scheme, whereby executing each of said stored procedure results in the retrieving of all resource score master data required as input by said stored procedure's respective step.

3. The telecommunication system of claim 1, wherein each of the identified stored procedures (SP10-SP15) corresponds to a respective database table (T1, T2, T5, T6, T7, T8) of the in-memory DBMS, each of said respective database tables comprising resource score master data required as input by one or more of the steps of the scoring scheme, wherein each of the identified stored procedures is configured to retrieve, upon execution, the resource score master data stored in a set of columns of said database table in a single database query, wherein said set of columns consists of all columns of said database table that comprise resource score master data required as input by any one of the steps of the at least one scoring scheme.

4. The telecommunication system of any one of the previous claims, wherein the score calculation device calculates the final score value by means of a scoring engine (226), the telecommunication system further comprising a design-time module (221) for creating and modifying the stored procedures, the design-time module being configured for executing, at design time of the scoring engine and of the stored procedures:
- accessing the database server for analyzing a plurality of scoring schemes (237) in the in-memory DBMS, the plurality of scoring schemes (237) comprising the at least one scoring scheme (502);
for each of the analyzed scoring schemes:
- identifying all database tables (T1-T8) and all columns (C1-C9) comprising resource score master data required by any of the steps of said analyzed scoring scheme as input;
- automatically generating the plurality of stored procedures, the plurality of stored procedures being parallel executable and being configured to retrieve, when executed, the resource score master data required as input by one or more of the steps of said scoring scheme;
- assigning the generated plurality of stored procedures to the at least one scoring scheme; and
- storing the generated plurality of stored procedures in association with an identifier of said scoring scheme in a repository (232) of the in-memory DBMS (230).

5. The telecommunication system of claim 4, the design-time module being configured for executing, at design time of the scoring engine (226) and of the stored procedures, for each of the analyzed scoring schemes:
- determining that a new scoring scheme has been added to the plurality of scoring schemes (237) in the in-memory DBMS, the new scoring scheme comprising one or more new steps, and/or determining that a new step was added to one or more of the existing scoring schemes;
- identifying all database tables (T1-T8) and all columns (C1-C9) comprising resource score master data required by any of the new steps;
- automatically determining, for each of the new steps, if one of the stored procedures is already capable of retrieving resource score master data required by said step;
- if none of the stored procedures is capable of retrieving resource score master data required by said new step, automatically generating a new stored procedure that is parallel executable and is configured to retrieve, when executed, the resource score master data required as input by said new step;
- assigning said new stored procedure or an existing stored procedure capable of retrieving resource score master data required by said new step to the scoring scheme comprising said new step.

6. The telecommunication system of any one of claims 4-5, the design-time module being configured for executing, at design time and for each of the analyzed scoring schemes:
- transforming the plurality of stored procedures assigned to said scoring scheme into a data flow graph, wherein each of the stored procedures is represented by an edge of said graph, each edge having assigned a name of the database table and a name of the one or more columns of said database table that comprise the resource score master data to be retrieved by said stored procedure;
- sending the data flow graph to a workflow processing engine;
- the workflow processing engine automatically combining the sent data flow graph with one or more other data flow graphs for assembling a resulting graph; and
- the workflow processing engine automatically executing the resulting graph, thereby calculating another final score value whose calculation uses the final score generated by the sent data flow graph as intermediate result.

7. A method implemented by a telecommunication system comprising an score calculation device (220) and a database server (816), the score calculation device (220) being connected via the network to a plurality of client devices, the database server comprising a parallel processor (239) configured for providing an in-memory DBMS (230), wherein the in-memory DBMS is coupled to the score calculation device, the method comprising, at runtime of the telecommunication system:
- the score calculation device (220) receiving (702) a first request (818) from one of the client devices;
- the score calculation device identifying (704) at least one scoring scheme (502) being associated with the first request and being stored in the in-memory DBMS, the at least one scoring scheme specifying a sequence of calculation steps (St1-St8) for calculating a final resource score value (RS_{final}), each step except the first one of the sequence of calculation steps using an intermediate result (RSₒᵣᵢ, RS_{IM2}, RS_{IM3}, RS_{IM4}, RS_{IM5}, RS_{IM6}, RS_{IM7}, RS_{IM8}) generated by a previous step as input, wherein two or more of said steps in addition respectively require resource score master data (234, RSMD1-RSMD8) as input for calculating said step's intermediate result;
- the score calculation device identifying (706) a plurality of stored procedures assigned to the at least one scoring scheme, the plurality of stored procedures being parallel executable and being configured to retrieve, when executed, the resource score master data required as input by the steps of the at least one scoring scheme;
- the score calculation device triggering (708), by sending a single second request (824) to the in-memory DBMS, a parallel execution of the identified stored procedures by the in-memory DBMS (230), the in-memory DBMS running on a parallel processor (239);
- the in-memory DBMS executing (709) in parallel the identified stored procedures (SP1-SP8; SP10-SP15) for retrieving all resource score master data required by the steps of the at least one scoring scheme;
- the score calculation device receiving (710) the retrieved resource score master data from the in-memory DBMS in a single first response (820);
- after having received the resource score master data, the score calculation device sequentially executing (714) the steps of the at least one scoring scheme for calculating the final resource score value (RS_{final}), thereby in each step taking the received resource score master data as input; and
- the score calculation device returning the calculated final resource score value (RS_{final}) to the one client device in a single second response (822).

8. The method of claim 7, the telecommunication system further comprising a design-time module (221) for creating and modifying the stored procedures, the design-time module (221) at design time of the stored procedures being configured for:
- accessing the database server for analyzing a plurality of scoring schemes (237) in the in-memory DBMS, the plurality of scoring schemes (237) comprising the at least one scoring scheme (502);
for each of the analyzed scoring schemes:
- identifying all database tables (T1-T8) and all columns (C1-C9) comprising resource score master data required by any of the steps of said analyzed scoring scheme as input;
- automatically generating a plurality of stored procedures, the plurality of stored procedures being parallel executable and being configured to retrieve, when executed, the resource score master data required as input by the steps of said scoring scheme;
- assigning the generated plurality of stored procedures to the at least one scoring scheme; and
- storing the generated plurality of stored procedures in association with an identifier of said scoring scheme in a repository (232) of the in-memory DBMS (230).

9. The method of claim 7 or 8, the method comprising further method-steps executed by the design-time module (221) at design time, the further method-steps comprising, for each of the analyzed scoring schemes:
- determining that a new scoring scheme has been added to the plurality of scoring schemes (237) in the in-memory DBMS, the new scoring scheme comprising one or more new steps, and/or determining that a new step was added to one or more of the existing scoring schemes;
- identifying all database tables (T1-T8) and all columns (C1-C9) comprising resource score master data required by any of the new steps;
- automatically determining, for each of the new steps, if one of the stored procedures is already capable of retrieving resource score master data required by said step;
- if none of the stored procedures is capable of retrieving resource score master data required by said new step, automatically generating a new stored procedure that is parallel executable and is configured to retrieve, when executed, the resource score master data required as input by said new step;
- assigning said new stored procedure or an existing stored procedure capable of retrieving resource score master data required by said new step to the scoring scheme comprising said new step.

10. The method of any one of claims 7-9, wherein the generation of the plurality of stored procedures for each one of the plurality of scoring schemes comprises:
the design-time module (221), at design time and for each of the analyzed scoring schemes:
- transforming the plurality of stored procedures assigned to said scoring scheme into a data flow graph, wherein each of the stored procedures is represented by an edge of said graph, each edge having assigned a name of the database table and a name of the one or more columns of said database table that comprise the resource score master data to be retrieved by said stored procedure; and
- sending the data flow graph to a workflow processing engine;
- the workflow processing engine automatically combining the sent data flow graph with one or more other data flow graphs for assembling a resulting graph; and
- the workflow processing engine automatically executing the resulting graph, thereby calculating another final score value whose calculation uses the final score generated by the sent data flow graph as intermediate result.

11. The method of any one of claims 7-10, wherein the generation of the plurality of stored procedures comprises, at design time and for each one of the plurality of scoring schemes:
- the design time module identifying all steps specified in the scoring scheme and identifying, for each of said steps, all database tables and database columns comprising resource score master data that needs to be retrieved as input for executing said step;
- for each of the identified steps, generating a stored procedure (SP1-SP8) that is configured to retrieve, upon execution, all resource score master data required by said step from the columns and tables identified for said step.

12. The method of any one of claims 7-10, wherein the generation of the plurality of stored procedures comprises, at design time and for each one of the plurality of scoring schemes:
- the design time module identifying all database tables that comprise resource score master data required as input by any one of the steps of the scoring scheme;
- for each of the identified database tables, the design time module generating a stored procedure (SP10-SP15), wherein each generated stored procedure is configured to retrieve, upon execution, the resource score master data stored in a set of columns of the database table for which the stored procedure was generated, said retrieving comprising a single database query, wherein said set of columns consists of all columns of said database table that comprise resource score master data required as input by any one of the steps of the scoring scheme.

13. The method of any one of previous claims 7-12, wherein each stored procedure comprises a single database query, the single database query being configured to retrieve resource score master data from multiple columns of a single table.

14. The method of any one of previous claims 7-13, wherein the receiving of the retrieved resource score master data from the in-memory DBMS by the score calculation device comprises:
- retrieving the resource score master data directly from a data store (240) of the in-memory DBMS; or
- creating a session for exchanging data with the one client device; storing (712) the retrieved resource score master data by the score calculation device in a cache (606) of the score calculation device in association with a session-ID of said session, the cache being managed by the score calculation device, the retrieved resource score master data stored in the cache being valid only during the session; retrieving the resource score master data from said cache (606); and maintaining the resource score master data in the cache during the session in unaltered form.

15. A computer readable medium comprising instructions that when executed by a processor cause the processor to execute the steps of any one of the previous claims 8-14.
